# EUROPEAN PATENT SPECIFICATION

(11) **EP 1 658 795 B1**
(45) Date of publication and mention of the grant of the patent: **20.08.2008**
(21) Application number: 04027386.4
(22) Date of filing: 18.11.2004
(51) Int. Cl.: A47J 31/40, B65D 81/00

(54) **Coffee machine and method for producing a hot drink**
Kaffeemaschine und Verfahren zum Herstellen von warmen Getränken
Machine à café et procédé de préparation d'une boisson chaude

(43) Date of publication of application: 24.05.2006
(73) Proprietor: Press Unique B.V., 3512 NK Utrecht (NL)
(72) Inventor: Evgi, Ram, Tel-Aviv 61130 (IL)
(74) Representative: Eisenführ, Speiser & Partner

(56) References cited:
- EP-A- 0 344 541
- US-A- 3 589 272
- US-A- 5 010 221
- US-A- 5 049 713
- US-A- 5 300 308
- US-A1- 2003 159 589

## Description

Invention related to a coffee machine and/or a method for producing a hot drink on the basis of coffee or tea. Lots of coffee machines and methods for producing coffee or tea are well known in the state-of-the-art, unfortunately the quality of those hot drinks is not all the time as desired and required from the customers.

Sometimes also the usage and operability is not well engineered, such as that the individual consumer is unable to make its own coffee or tea drink in a simple and inexpensive way and even the best coffee machine is unable to make an excellent coffee or tea, if the water used for the hot drink is suboptimal such that the taste of the hot drink is not that what is desired by the consumer, and the taste is also negatively influenced by the effects of the physical contacts between the ingredients and the producing elements.

Thus, the object of the invention is to improve coffee machines in general and the method for producing coffee or tea hot drinks such that the user at all times has a product which has an extremely high quality.

Single or double dose of tea, coffee, Espresso coffee, herbal infusion or any other form of hot drink, packed together with the water at the exact amount and quality controlled to meet the highest standard ready to be freshly brewed in the special brewing device according to this invention. This device heats the water to the optimal temperature and presses the water through the product to infuse and/or extract it to the cup, whereby also the pressure is within an optimal value range.

The hot drink product on the basis of tea or coffee or chocolate can come in several variations, such as "coffee or tea to go", a disposable paper or plastic cup, packed together with the product and sugar, milk, etc. This variation can be used in dry-brewing machines situated in public areas.

Similar, a non-disposable system is designed with a refillable and removable container for both water and the substance/extract (coffee, tea for example) that retains the unique brewing method where the machine core and heating element remain dry all the time, free from contact with any ingredient, such that the taste of one ingredient cannot influence the taste of another product (ingredient).

According to the invention a disposable insert container contains the exact amount of water in the exactly required quality required for the infusion. Non-disposable and disposable insert containers are to be heated from the outside to be used in a dry-brewing machine for hot drinks.

The dry-brewing machines such as an Espresso making machine that is in configuration shall be dry, free from contact with any of the ingredients. The water is provided in the disposable insert container and separated from the substance/extract. The water shall be heated and pressed onto the cup from the outside indirectly and the insert container walls separate both water and the substance from being in contact with the heating and pressure system, infusion chamber and dispersion mash.

Thus, the insert container wall can be made from a suitable food-safe material, such as plastics, polymers, metals, etc., whereby no negative influence to the taste is given.

The disposable insert container is supplied in a sealed state. The container is automatically opened, the aperture letting the water flow into the infusion chamber created by the dry-brewing machine. In case of a non-disposable container, the aperture is created using an actual valve.

Thus, it is also possible that the disposable/non-disposable water container is inserted into the dry-brewing machine, then heated from the outside, creating a steam source.

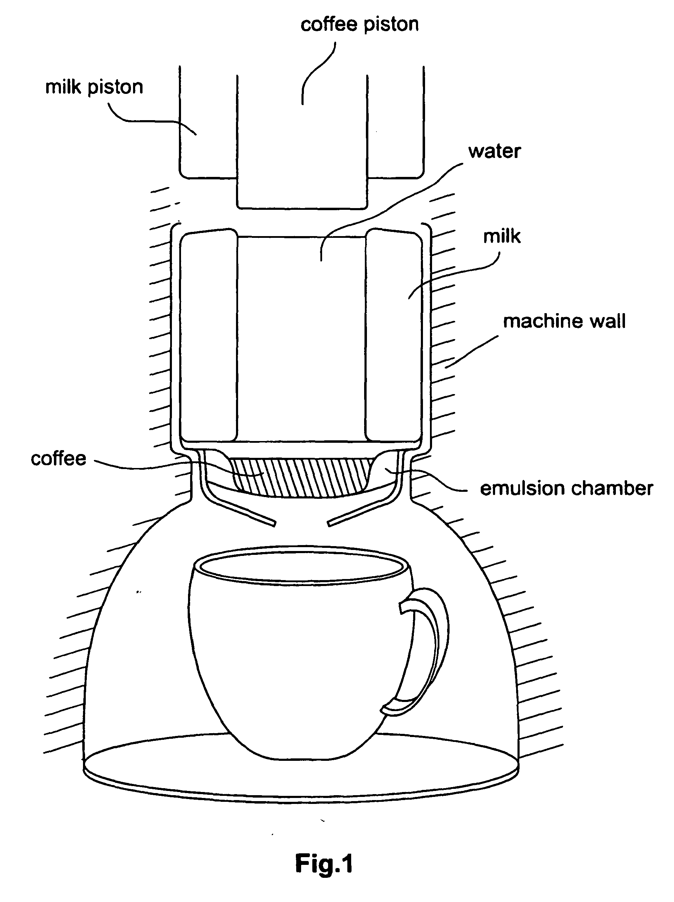

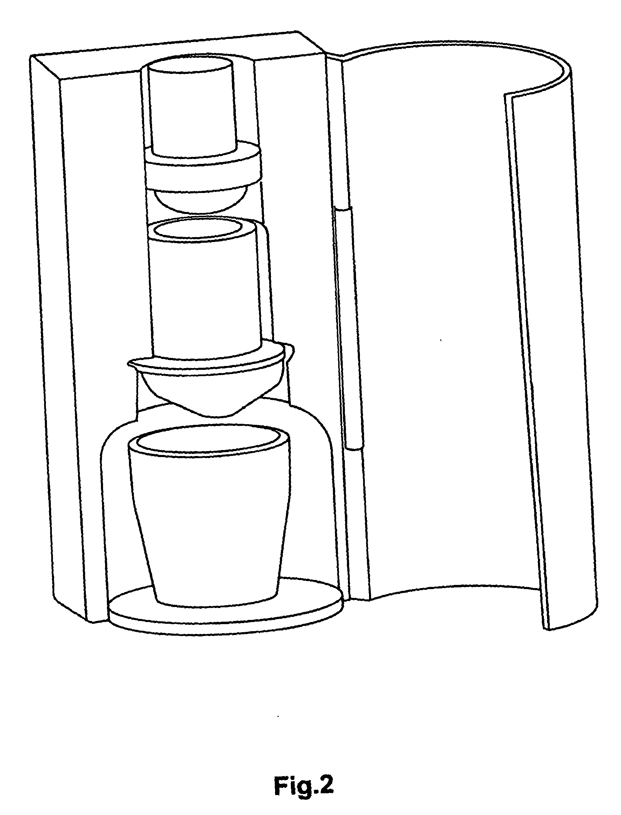

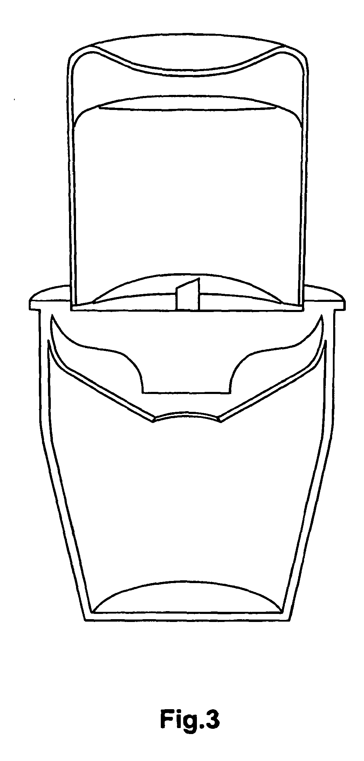

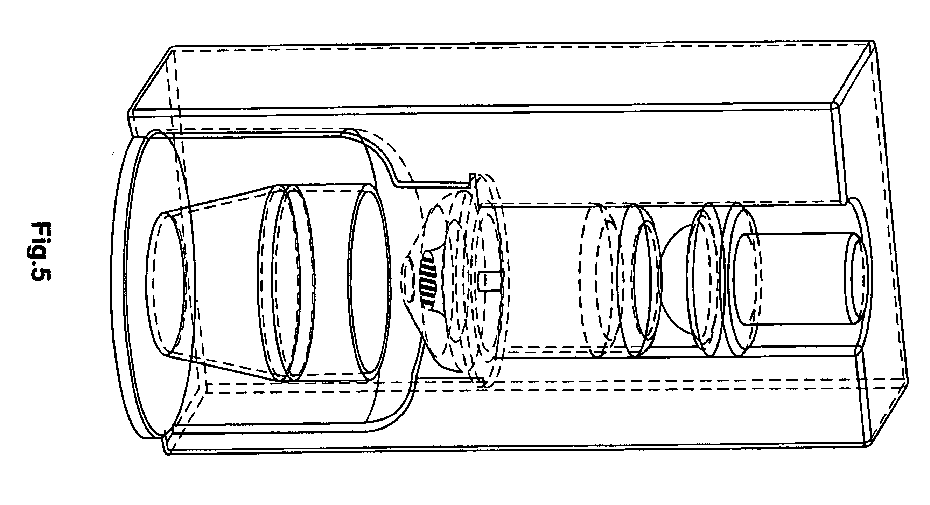

The figures 1 to 5 attached to the application are showing the concepts and lots of details of the invention and these figures referred to here and below will be discussed later on. Thus, the concept of the invention in the first place is not to have only a package with the ingredient, whereby the package contains the exact amount of ingredient, but also to have another container with water or fluid containing the exact amount of water to be needed for the hot drink product and this package water can be heated and then pressed to the ingredients, such that the final product has the same quality all over the world, independently where the product is made, because the package contains the water as desired by the user or manufacturer. If, for example, the water container contains water from a specific source in Italy, it is possible with the invention to create a genuine Italian Espresso made by Italian water and Italian Espresso ingredient, whereby the water is totally fresh after having been put into the closed container and will be fresh for a very long time.

Thus, the basic concept of the invention is that there is never a physical contact between the water (or fluid) on the one side and the ingredient on the other side before both elements have to be brought together, and on the other side there is also no physical contact of the water and the ingredient with the mechanical parts of the machine, such that at all times we have a consistent quality since the water is of constant quality and defined quantity and thus, the product everywhere in the world has the consistently the same and the identical parameters regarding temperature, quantity, taste, etc., as defined by the manufacturer/supplier of the device or product.

There is some prior art, which can be identified with the following numbers: DE 37 35 352 A1, DE 100 07 254 A1, DE 196 09 428 A1, DE 74 30 109 U1, DE 89 09 315 U1, EP 057 671 A2, EP 344 541 A1, EP 468 080 B1, EP 521 187 B1, EP 521 188 B1 (as DE 691 14 278 T2), EP 784 955 B1 (as DE 696 02 713 T2), US 4 382 402 A, US 4 846 052 A, US 5 327 815 A, WO 1995 / 07041 A1.

Not even one of these documents and not the combination of all of them is fulfilling a product quality as suggested with the invention described herein. The European patent application EP 0344541 is addressing a coffee-making issue from a Mocha pot point of view. Low pressure, caused by high temperature water being the only source for energy force for pushing, and infusion, basically creates a coffee Mocha. Thus, this product lacks many of the properties unique to Espresso, Cappuccino drinks and therefore, this application EP 0344541 cannot be compared with the inventional concept of the present application.

The aim of the invention is to produce a product presenting the same renowned creamer, full-bodied and mild taste in cup for which the Italian Espresso is appreciated for, without burning the oils (making the coffee taste sharp and bitter without creamer).

In EP 0344541 the temperature point is dedicated by the need to push the container content through the substance, instead of being considered for the best point for the optimum infusion from the substance. The hot temperature in this citation combined with low pressure infusion results in poor product with burned oil and over-extraction (see Mocha) pot compared to pump operated Espresso machines). Also, there cannot be any creamer using the disposable Mocha pot in EP 0344541.

The invention of this application suggests, in addition to what is described here before, heating the water to the optimum temperature unique for every chosen substance, for example 88°C in case of Espresso coffee production. Attempting in EP 0344541 to make proper Espresso coffee requires pushing an infusion pressure of between 0,8 - 1,5 bar and this can only be reached by heating the water to 100°C -115°C. The result is insufficient and the taste is worse.

Thus, one of the concepts of the invention here is also to remove completely the co-dependence of pressure and temperature. In addition to the package of the water container, the infusion is caused by mechanical stress, not vapor. A compatible Espresso machine, piston type, using micro-wave or any other kind of heat energy source will produce coffee by disposable cartridges. Temperature, piston moving and pressure shall be all regulated by the machine.

In the proposed machine, a controlled temperature heating point can be optimised for coffee, tea and any other.

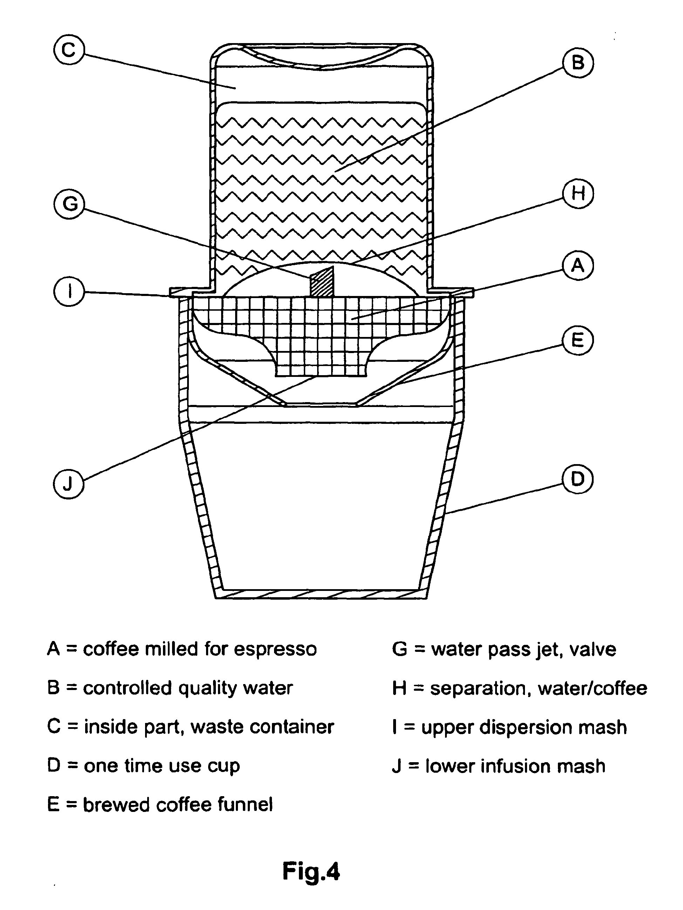

A dual piston system ― see figure 4 ― is enabling a timed and progressive infusion/emulsion of a substance with two distinct liquids to create milk-based drinks (Cappuccino, milk-based tea etc.), thus heating water to desired temperature, extracting coffee by water using one piston, steaming milk and emulsifying it with hot steam (creating frothed milk), pressing the milk into the cup using the second piston.

Thus, the inventional machine can also be used for soluble milk replacement substance manufacturers for babies, i. e. those who require heating to a low predetermined temperature (for example 35°C). A disposable milk-replacement drink containing the exact required mixtures could be made available using the invention.

The invention concept is overcoming lots of servicing problems, a poor reliability and poor performance and results in the cup, caused by the contact of the ingredients with the machine, which create lime scale residue, burnt oil residues and taste, independent of the available water quality.

According to the inventional concept for an Espresso coffee the temperature should be below 95°C all the time, preferably in the range of 86 to 90°C, in particular 88°C for a real Espresso.

The recommended pressure for the inventional coffee machine is approximately 9 bar as built up by a pump. The exact pressure is less critical and will be tailored to the desired consistently applied specification of the manufacturer/supplier.

The aforementioned application describes a coffee Espresso process, whereby this does not mean that the inventional machine is only able to produce a typical Espresso. A coffee Espresso process means that the fluid, which is brought into contact with the ingredient like coffee powder or Espresso powder, is pressed on the defined pressure, for example 9 bar and with the predefined temperature like e. g. 88°C during a certain time, for example 22 seconds (for 35 centilitre) trough the ingredient, which has the predefined amount (for example 7 gram for 35 centilitre Espresso).

Thus, the inventional machine is able to lead through the defined amount of fluid with the defined pressure and a defined temperature with the defined time and this altogether is done without direct contact of the fluid and/or the ingredient with the machine itself, for example with a part of the housing of the machine itself, because the fluid as well as the ingredient is contained in different containers, which are brought in contact with each other during the production process.

By encapsulation of the fluid in a container it is also possible to produce a real original Italian Espresso by encapsulating original Italian water in the one container and by encapsulating a real Italian Espresso ingredient in the other container, such that with the invention it is possible for the first time to produce individually a real original drinkable food like an original Italian Espresso worldwide and due to the fact, that neither the fluid nor the ingredient is ever in direct contact with the machine itself, the invention also provides a top level of quality of the drinkable food.

The inventive system may be free of service and period cleaning means and thus, it is possible with the inventive system to obtain a consistent top quality beverage that is totally free of any undesired taste. To create a machine that is capable of brewing several different types of hot drinks, one after another, without leaving any taste or odour to the brewing device, the inventive system can be obtained only by dividing the machine in two groups.

One group of the machine is the insert of an accommodation house, heating source, pressure source, operation control and electronic control and thus, it is more the hardware of the machine.

The second group is the water/liquid container, valve, dispersion mash, infusion/extraction chamber, funnel for guiding the final product to the serving cup. This refers to the other part/group of machine uniquely combined and packed with a brewing liquid/brewing substance, this refers to the insert.

The inventive machine is holding the insert, sourcing the heat and pressure to brew it with the desired parameters, and this is done from the outside to the insert. All other parts and components that are required for perfect infusion/extraction, such as dispersion mash, valve, infusion chamber, funnel are one-time-use, as part of the insert.

According to the steam driven system insert mentioned to make one thing clear. The only way how to achieve infusion in lower pressure and purposes of reducing the infusion/extraction temperature, is only using less amount of coffee and/or grinding, coarse-grained coffee, which will produce a true quality product, eventually.

Summarizing, the inventive machine is able to produce hot drinks, coffee and herbal infusion and such alike by using a disposal insert, whereby the machine remains free of direct contact with any of the ingredients, like water, coffee, or such alike. The inventive machine is featuring the heating source, to heat the water or substance from the outside of the insert. The inventive machine is featuring the pressure source, to press water or liquid for infusion/extraction with the desired parameters like pressure, temperature etc. from the outside of the insert.

The inventive machine is featuring a chamber to accommodate the insert, the machine is free of any contact with any of the ingredient, such as water, liquid, substance etc. Direct contact is only given with disposable insert, refillable insert.

The disposable insert, to accommodate the ingredients, is to be used in the machine. The insert in containing the right and optimal quantity and quality of water, milk, and such alike and substance also like coffee, tea, baby milk and such alike.

The insert is featuring all mechanical parts that are required for holding water, liquid, substance in a sealed state, in the right order to be extracted in the machine.

The insert featuring all mechanical parts, required for the infusion, extraction, such as isolation material for separating liquid from substance, is to be opened only in infusion/extraction time (or case).

The inventive machine is able to recognize the product inside of the insert to heat the water or other liquid to the optimal temperature point anywhere from baby milk to a real high temperature beverage, such as coffee of tea. By being programmed by the manufacturer or the user the inventive machine can use the heating source, such as microwave, to be able to heat the liquid/substance from the outside of the disposable container insert inserted into the machine.

The inventive machine furthermore is able to recognize the product inside the insert to build a pressure for infusion or extraction at the correct pressure that is required in the specific substance, whether at a low pressure infusion, like tea or filter coffee, to a high pressure extraction method for Espresso coffee or other substance.

## Claims

1. System for producing of drinkable food like coffee, tea, shake, soup or such alike, on basis of an ingredient like e. g. tea leaves, coffee or soup powder etc. and of a drinkable fluid like water, milk or such alike, comprising a machine, a first removable container (1) comprising the ingredient and a second removable container (2) comprising the fluid, the first and second removoble containers (1, 2) being arranged in the machine, **characterized in that** the machine comprises pressing means (12, 13) to mechanically exert a force on at least one of the containers such, that the fluid of the second removable container is pressed into the first container (1) and before, during and after the production of food neither the fluid nor the food ingredient is ever in direct contact with the machine itself.

2. System according to claim 1, whereby the pressing means (12, 13) comprises a piston.

3. System for producing drink or food according to one of the aforementioned claims, whereby the machine has an heating element to heat the fluid on a predefined temperature and whereby the heating element itself is never in contact with the fluid.

4. System according to claim 3, whereby the heating element is provided to heat the fluid on a predefined temperature which is usually below 95°C, preferably in the range between 86 °C to 90°C.

5. System according to one of the aforementioned claims, whereby in the machine there is arranged a third container (3), which is preferably circumventing the second container and whereby the third container (3) comprises a second fluid, for example milk or such alike.

6. System according to one of the aforementioned claims, **characterized by** the fact that the second container (2) is exchangeable and whereby the second container (2) is opened by pressure of a piston (12, 13) on at least one of the containers.

7. System according to claim 5, **characterized by** the fact tha the second container (2) and/or third container (3) are exchangeable and whereby the second container (2) and/or the third container (3) are opened by pressure of a piston (12, 13) on at least one of the containers.

8. System according to one of the aforementioned claims, **characterized by** the fact that the second container (2) contains water of a specific source, for example from an Italian source if the machine is intended to produce genuine Italian Espresso.

9. System according to one of the aforementioned claims, **characterized in that** at least the first (1) and the second container (2) are combined in one insert.

## Patentansprüche

1. System zum Herstellen eines trinkbaren Nahrungsmittels wie Kaffee, Tee, ein Mixgetränk, Suppe oder dergleichen, auf der Basis einer Zutat wie beispielsweise Teeblätter, Kaffee- oder Suppenpulver etc. und einem trinkbaren Fluid wie Wasser, Milch oder dergleichen, umfassend eine Maschine, einen ersten entnehmbaren Behälter (1) umfassend die Zutaten, und einen zweiten entnehmbaren Behälter (2) umfassend das Fluid, wobei der erste und der zweite entnehmbare Behälter (1, 2) in der Maschine angeordnet sind, **dadurch gekennzeichnet, dass** die Maschine Pressmittel (12, 13) umfasst, um mechanisch eine Kraft auf wenigstens einen der Behälter so auszuüben, dass das Fluid des zweiten entnehmbaren Behälters in den ersten Behälter (1) gepresst wird und bevor, während und nach dem Herstellen des Nahrungsmittels weder das Fluid noch die Nahrungsmittelzutat jemals in direktem Kontakt mit der Maschine selbst sind.

2. System nach Anspruch 1, wobei das Pressmittel (12, 13) einen Kolben umfasst.

3. System zum Herstellen eines Getränks oder Nahrungsmittels nach einem der vorstehenden Ansprüche, wobei die Maschine ein Heizelement aufweist zum Erhitzen des Fluids auf eine vorbestimmte Temperatur, und wobei das Heizelement selbst niemals in Kontakt mit dem Fluid ist.

4. System nach Anspruch 3, wobei das Heizelement dazu vorbereitet ist, das Fluid auf eine vorbestimmte Temperatur zu erhitzen, die üblicherweise unter 95°C ist, vorzugsweise in dem Bereich zwischen 86°C bis 90°C.

5. System nach einem der vorstehenden Ansprüche, wobei in der Maschine ein dritter Behälter (3) angeordnet ist, der vorzugsweise den zweiten Behälter umgibt und wobei der dritte Behälter (3) ein zweites Fluid enthält, beispielsweise Milch oder dergleichen.

6. System nach einem der vorstehenden Ansprüche, **gekennzeichnet durch** die Tatsache, dass der zweite Behälter (2) austauschbar ist und wobei der zweite Behälter (2) geöffnet wird **durch** Druck eines Kolbens (12, 13) auf wenigstens einen der Behälter.

7. System nach Anspruch 5, **gekennzeichnet durch** die Tatsache, dass der zweite Behälter (2) und/oder der dritte Behälter (3) austauschbar sind und wobei der zweite Behälter (2) und/oder der dritte Behälter (3) geöffnet werden **durch** Druck eines Kolbens (12, 13) auf wenigstens einen der Behälter.

8. System nach einem der vorstehenden Ansprüche, **gekennzeichnet durch** die Tatsache, dass der zweite Behälter (2) Wasser einer bestimmten Quelle enthält, beispielsweise aus einer italienischen Quelle, wenn die Maschine dazu vorgesehen ist, echten italienischen Espresso herzustellen.

9. System nach einem der vorstehenden Ansprüche, **dadurch gekennzeichnet, dass** wenigstens der erste (1) und der zweite Behälter (2) in einem Einsatz kombiniert sind.

## Revendications

1. Système pour produire un aliment buvable comme du café, du thé, un mélange lacté, de la soupe ou autres, sur la base d'un ingrédient comme par exemple, des feuilles de thé, du café ou de la soupe en poudre, etc. et un fluide buvable comme de l'eau, de lait ou autre, comprenant une machine, un premier récipient amovible (1) comprenant l'ingrédient et un second récipient amovible (2) comprenant le fluide, les premier et second récipients amovibles (1, 2) étant agencés dans la machine, **caractérisé en ce que** la machine comprend des moyens de pression (12, 13) pour exercer mécaniquement une force sur au moins un des récipients de telle manière que le fluide du second récipient amovible est pressé dans le premier récipient (1) et avant, pendant et après la production d'aliment ni le fluide ni l'ingrédient d'aliment ne sont jamais en contact direct avec la machine elle-même.

2. Système selon la revendication 1, dans lequel les moyens de pression (12, 13) comprennent un piston.

3. Système pour produire une boisson ou un aliment selon l'une quelconque des revendications précédentes, dans lequel la machine a un élément de chauffage pour chauffer le fluide à une température prédéterminée et dans lequel l'élément de chauffage lui-même n'est jamais en contact avec le fluide.

4. Système selon la revendication 3, dans lequel l'élément chauffant est fourni pour chauffer le fluide à une température prédéterminée qui est habituellement inférieure à 95°C, de préférence dans la plage entre 86°C et 90°C.

5. Système selon l'une quelconque des revendications précédentes, dans lequel dans la machine il est agencé un troisième récipient (3), qui entoure de préférence le second récipient et dans lequel le troisième récipient (3) comprend un second fluide, par exemple du lait ou autre.

6. Système selon l'une quelconque des revendications précédentes, **caractérisé par le fait que** le second récipient (2) est échangeable et dans lequel le second récipient (2) est ouvert par la pression d'un piston (12, 13) sur au moins un des récipients.

7. Système selon la revendication 5, **caractérisé par le fait que** le second récipient (2) et/ou le troisième récipient (3) sont échangeables et dans lequel le second récipient (2) et/ou le troisième récipient (3) sont ouverts par la pression d'un piston (12, 13) sur au moins l'un des récipients.

8. Système selon l'une quelconque des revendications précédentes, **caractérisé par le fait que** le second récipient (2) contient de l'eau d'une source spécifique, par exemple d'une source italienne si la machine est sensée produire du véritable expresso italien.

9. Système selon l'une quelconque des revendications précédentes, **caractérisé par le fait qu'**au moins le premier (1) et le second (2) récipients sont combinés en un insert.
